# EUROPÄISCHE PATENTSCHRIFT

(11) **EP 0 959 311 B1**
(45) Veröffentlichungstag und Bekanntmachung des Hinweises auf die Patenterteilung: **17.12.2003**
(21) Anmeldenummer: 99109774.2
(22) Anmeldetag: 18.05.1999
(51) Int. Cl.: F25D 11/02, F25D 29/00

(54) **Verfahren zur Regelung eines Kältegerätes**
Regulation method for a refrigeration apparatus
Procédé de réglage d'un appareil frigorifique

(30) Priorität: 18.05.1998 DE 19822275
(43) Veröffentlichungstag der Anmeldung: 24.11.1999
(73) Patentinhaber: BSH Bosch und Siemens Hausgeräte GmbH, 81669 München (DE)
(72) Erfinder: Joksch, Harald Dipl.-Ing., 89269 Vöhringen (DE); Konopa, Helmut Dipl.-Ing., 89340 Leipheim (DE)

(56) Entgegenhaltungen:
- DE-A- 3 904 216
- DE-A- 4 210 603
- DE-A- 19 510 268
- US-A- 4 086 780
- US-A- 4 288 854

## Beschreibung

Die Erfindung betrifft ein Verfahren zur Regelung eines Kältegerätes gemäß dem Oberbegiff des Anspruchs 1. So ein verfahren ist aus der DE-A-3904216 bekannt.

Bei Kältegeräten, wie beispielsweise Kühl- und Gefrierkombinationen oder Kühlgeräten mit einem ***-Gefrierfach, ist es bekannt, die zur Kühlung der Kältefächer dienenden Verdampfer in ein sogenanntes Einkreiskältesystem einzubinden. Die bestimmungsgemäße Temperatur in den beiden Kältefächem wird dabei üblicherweise durch einen einzigen, im Kühlfach vorgesehenen Temperaturregler gesteuert, so daß über den an sich die Kühlfachtemperatur beeinflussenden Temperaturregler indirekt auch die Temperatur im Gefrierfach bestimmt ist. Eine derartige Regelung ist zwar äußerst kostengünstig, aber dann problematisch, wenn die Umgebungstemperatur des Kältegerätes niedrige Werte angenommen hat, so daß ein Temperaturanstieg im Kühlfach, bedingt durch den natürlichen Wärmeeinfall, nur sehr langsam erfolgt. Bedingt durch den geringen Wärmeeinfall kann es vorkommen, daß der durch den Temperaturregler angesteuerte Kältemittelverdichter über einen längeren Zeitraum außer Betrieb ist. Dies kann unter Umständen zur Folge haben, daß die bestimmungsgemäße Temperatur im Gefrierfach unzulässig hohe Werte annimmt und dadurch das dort eingelagerte Gefriergut gegebenenfalls Schaden nimmt. Um dieser Unzulänglichkeit entgegenzuwirken, ist man dazu übergegangen, im Kühlfach Heizeinrichtungen wie Heizdrähte, Glühlampen oder dergleichen einzusetzen, um bei niedrigen Umgebungstemperaturen einen rascheren Temperaturanstieg im Kühlfach erreichen zu können. Die Heizelemente sind dabei entweder manuell über einen als sogenannten "Winterswitch" bezeichneten Schalter durch eine Bedienperson oder über einen die Umgebungstemperatur des Gerätes erfassenden Temperatursensor in Betrieb nehmbar. Für den Fall der Inbetriebnahme der Heizeinrichtung anhand des manuell zu bedienenden Schalters besteht die Gefahr, daß die Bedienperson das Zu- bzw. Abschalten der Heizung vergißt, so daß im ersteren Fall die Temperatur im Gefrierfach auf unzulässig hohe Werte ansteigt und das eingelagerte Gefriergut gegebenenfalls Schaden nimmt, während im letzteren Fall die Energieaufnahme des Gerätes unnötig erhöht ist. Die Zuschaltung der Heizeinrichtung in Abhängigkeit der Umgebungstemperatur hat zur Folge, daß die Heizung auch immer dann in Betrieb ist, wenn die Umgebungstemperatur des Gerätes eine vorbestimmte, das Einschalten der Heizeinrichtung bewirkende Schalttemperatur unterschreitet, jedoch der Kältemittelverdichter infolge des auf die Reglerstellung "kalt" eingestellten Temperaturreglers oder infolge von im Kühlfach frisch eingelagerten Lagergutes an sich eine ausreichende Laufzeit zur Erreichung der bestimmungsgemäßen Fachtemperaturen aufweist und eine zusätzliche Ansteuerung, bedingt durch die erfaßte Umgebungstemperatur, überflüssig ist.

Der Erfindung liegt die Aufgabe zugrunde, ein Verfahren zur Regelung eines Kältegeräts gemäß dem Oberbegriff des Anspruchs 1 mit einfachen Maßnahmen derart zu verbessern, daß die Heizeinrichtung zielgerichtet betrieben ist und somit der Energieverbrauch des Kältegerätes sich effizienter gestaltet.

Diese Aufgabe wird durch die Merkmale gemäß Anspruch 1 gelöst.

Durch die erfindungsgemäße Regelung der Heizeinrichtung wird dessen Betrieb ausschließlich auf die im Fach tieferer Temperatur, wie beispielsweise einem Gefrierfach, abgestellt, so daß die Heizeinrichtung ausschließlich dann betrieben ist, wenn die Temperaturen im Gefrierfach tatsächlich unzulässig hohe Werte annehmen. Außerdem wird dem Fach höherer Temperatur wie beispielsweise dem Kühlfach, durch die Heizeinrichtung gerade soviel zusätzliche Wärme zugeführt, wie notwendig ist, daß das Fach tieferer Temperatur innerhalb seiner bestimmungsgemäßen Fachtemperatur betrieben ist. Durch die Erfassung der Gefrierfachtemperatur zum Betreiben der Heizeinrichtung ist es auch möglich, eine Heizeinrichtung mit verhältnismäßig hoher Leistung einzusetzen, da diese gemäß der Erfindung äußerst zielgerichtet, nämlich ausschließlich in Abhängigkeit der tatsächlich im Gefrierfach herrschenden Temperatur betrieben ist. Auf diese Weist ist das Kältegerät trotz der Anwendung einer indirekten Regelung für die Fachtemperatur im Kältefach tieferer Temperatur bei Umgebungstemperaturen von < 10°C bis 38°C unter Einhaltung der bestimmungsgemäßen Fachtemperatur im Kühlfach tieferer Temperatur, wie beispielsweise einem Gefrierfach funktionssicher betreibbar. Darüber hinaus sind bei dieser Art der Heizungssteuerung Fremdeinflüsse, wie zum Beispiel das Einwirken einer Bedienperson oder die Einlagerung von warmem Kühlgut im Kühlfach bzw. eine auf niedrige Betriebstemperatur im Kühlfach eingestellte Reglereinstellung völlig unbeachtlich, da diese Fälle durch die Temperaturermittlung der Fachtemperatur im Kältefach tieferer Temperatur mit berücksichtigt sind.

Nach einer bevorzugten Ausführungsform des Gegenstandes der Erfindung ist vorgesehen, daß die elektronische Ansteuereinheit in jeder Stehzeit des Verdichters die im Fach tieferer Temperatur herrschende Fachtemperatur mit dem hinterlegten Temperatursollwert vergleicht und beim Unter- oder Überschreiten der Solltemperatur die Abgabeleistung der Heizeinrichtung vermindert oder erhöht.

Durch die Erfassung und Auswertung der im Fach tieferer Temperatur herrschenden Fachtemperatur während der Stehzeit des Verdichters sind sehr gezielt die die Fachtemperaturen des Kältegerätes beeinflussenden Faktoren, wie zum Beispiel die Umgebungstemperatur erfaßbar, so daß sich eine sehr zielgerichtete und zweckoptimierte Beeinflussung der Abgabeleistung der Heizeinrichtung ergibt.

In besonders feinen Schritten beeinflußbar ist die Abgabeleistung der Heizeinrichtung, wenn nach einer nächsten vorteilhaften Ausgestaltung des Gegenstandes der Erfindung vorgesehen ist, daß die elektronische Ansteuereinheit die Abgabeleistung der Heizeinrichtung stufenweise vermindert oder erhöht.

Für die stufenweise Verminderung oder Erhöhung der Abgabeleistung der Heizeinrichtung können in dem Datenspeicher beispielsweise auch Kennlinien in Form von empirisch ermittelten Werten oder Kurvenzügen hinterlegt sein.

Entsprechend einer nächsten bevorzugten Ausführungsform des Gegenstandes der Erfindung ist vorgesehen, daß die elektronische Ansteuereinheit die Abgabeleistung der Heizeinrichtung nach jedem Temperaturvergleich zwischen der erfaßten Fachtemperatur im Fach tieferer Temperatur und der Solltemperatur um eine Stufe vermindert oder erhöht.

Durch die jeweils nur stufenweise Verminderung oder Erhöhung der Abgabeleistung ergibt sich bereits nach kurzer Zeit, nämlich nach einigen Regelzyklen des Kältekreislaufes, die bestimmungsgemäße Fachtemperatur im Fach tieferer Temperatur.

Auf besonders einfache und kostengünstige Art und Weise läßt sich die Abgabeleistung der Heizeinrichtung steuern, wenn nach einer nächsten bevorzugten Ausführungsform des Gegenstandes der Erfindung vorgesehen ist, daß die Abgabeleistung der Heizeinrichtung durch eine von der elektronischen Ansteuereinheit bewirkte Verkürzung oder Verlängerung der Heizdauer der Heizeinrichtung verändert ist.

Nach einer alternativen Ausführungsform des Gegenstandes der Erfindung ist vorgesehen, daß die Verminderung oder Erhöhung der Abgabeleistung der Heizeinrichtung durch eine getaktete Ansteuerung der Heizeinrichtung bewirkt ist.

Durch die Taktung der Heizeinrichtung ist diese deutlich weniger beansprucht, wodurch deren Lebensdauer, insbesondere, wenn es sich dabei um die zur Heizung verwendete Kühlfachinnenbeleuchtung handelt, deutlich verlängert.

Gemäß einer letzten bevorzugten Ausführungsform des Gegenstandes der Erfindung ist vorgesehen, daß die elektronische Ansteuereinheit die Dauer der Verdichterstehzeit auswertet, mit einem Vergleichswert vergleicht und beim Überschreiten des Vergleichswertes die Abgabeleistung der Heizeinrichtung auf den Wert aus der vorausgegangenen Temperaturbewertung der Fachtemperatur des Faches tieferer Temperatur beläßt.

Hierdurch wird ein Temperaturanstieg im Kühlfach tieferer Temperatur über die bestimmungsgemäße Fachtemperatur vermieden.

Durch die Erfassung der beispielsweise in einem Gefrierfach einer Kühl- und Gefrierkombination mit einem Einkreiskältesystem herrschenden Fachtemperatur läßt sich eine Heizeinrichung unter Einbezug dieser momentan herrschenden Fachtemperatur sehr zielgerichtet in ihrer Abgabeleistung dahingehend beeinflussen, daß diese genau auf die momentan im Gefrierfach herrschende Temperatur abgestimmt ist, so daß sich ein sehr energieeffizienter Betrieb der Kühl- und Gefrierkombination ergibt. Die Abgabeleistung der Heizeinrichtung ist im Gegensatz zum Stand der Technik, wonach die Heizeinrichtung entweder mit ihrer vollen Abgabeleistung betrieben wurde oder außer Betrieb gesetzt war, äußerst bedarfsgemäß dosierbar. Die von der Heizung abgegebene Leistung wird dabei durch einen elektronischen Regler bestimmt, welcher auf kostengünstige Weise durch eine entsprechende Steuersoftware angesteuert ist. Zur Veränderung der Abgabeleistung wird eine gemittelte Gefrierfachtemperatur herangezogen, welche sich aus dem Mittelwert einzelner, während einer Periodendauer, welche sich aus der Verdichterlaufzeit und aus der Verdichterstehtzeit ergibt, erfaßte Temperaturwerte ermittelt. Durch die bedarfsgemäße, ausschließlich auf die im Gefrierfach herrschende Temperatur abgestellte Steuerung der Abgabeleistung an der Heizeinrichtung ist die in Gefrierfachtemperatur so gezielt beeinflußbar, daß diese einer quasi-Regelung unterliegt und selbst durch die indirekte Regelung über die Kühlfachtemperatur so genau eingehalten ist, daß eine Temperaturanzeige dieser Gefrierfachtemperatur möglich wäre.

## Patentansprüche

1. Verfahren zur Regelung eines Kältegerätes mit wenigstens zwei thermisch voneinander getrennten Kältefächern unterschiedlicher Fachtemperatur und mit einem Verdichter, welcher wenigstens zwei in Reihenschaltung hintereinander angeordnete, zur Kühlung der Kältefächer dienende Verdampfer mit Kältemittel beaufschlägt und welcher von einem in einem Fach höherer Temperatur angeordneten Reglerelement zur Aufrechterhaltung der bestimmungsgemäßen Fachtemperaturen gesteuert ist, von denen die Fachtemperatur im Fach höherer Temperatur von einer Heizeinrichtung beeinflußbar ist, wobei eine elektronische Ansteuereinheit vorgesehen ist, welche die von wenigstens einem Temperatursensor erfaßte Fachtemperatur im Fach tieferer Temperatur mit einer in einem Datenspeicher hinterlegten Solltemperatur vergleicht und **dadurch gekennzeichnet, dass** beim Unter- oder Überschreiten der Solltemperatur die Abgabeleistung der Heizeinrichtung derart vermindert oder erhöht, dass die von der Heizung abgegebene leistung durch einen elektronischen Regles bestimmt ist.

2. Verfahren nach Anspruch 1, **dadurch gekennzeichnet, daß** die elektronische Ansteuereinheit in jeder Stehzeit des Verdichters die im Fach tieferer Temperatur herrschende Fachtemperatur mit dem hinterlegten Temperatursollwert vergleicht und beim Unter- oder Überschreiten der Solltemperatur die Abgabeleistung der Heizeinrichtung vermindert oder erhöht.

3. Verfahren nach einem der Ansprüche 1 oder 2, **dadurch gekennzeichnet, daß** die elektronische Ansteuereinheit die Abgabeleistung der Heizeinrichtung stufenweise vermindert oder erhöht.

4. Verfahren nach Anspruch 3, **dadurch gekennzeichnet, daß** die elektronische Ansteuereinheit die Abgabeleistung der Heizeinrichtung nach jedem Temperaturvergleich zwischen der erfaßten Fachtemperatur im Fach tieferer Temperatur und der Solltemperatur um eine Stufe vermindert oder erhöht.

5. Verfahren nach Anspruch 1 bis 4, **dadurch gekennzeichnet, daß** die Abgabeleistung der Heizeinrichtung durch eine von der elektronischen Ansteuereinheit bewirkte Verkürzung oder Verlängerung der Heizdauer der Heizeinrichtung verändert ist.

6. Verfahren nach einem der Ansprüche 1 bis 4, **dadurch gekennzeichnet, daß** die Verminderung oder Erhöhung der Abgabeleistung der Heizeinrichtung durch eine getaktete Ansteuerung der Heizeinrichtung bewirkt ist.

7. Verfahren nach einem der Ansprüche 1 bis 6, **dadurch gekennzeichnet, daß** die elektronische Ansteuereinheit die Dauer der Verdichterstehzeit auswertet, mit einem Vergleichswert vergleicht und beim Überschreiten des Vergleichswertes die Abgabeleistung der Heizeinrichtung auf den Wert aus der vorausgegangenen Temperaturbewertung der Fachtemperatur des Faches tieferer Temperatur beläßt.

## Claims

1. Method for regulating a refrigerating appliance with at least two refrigerating compartments, which are thermally separated from one another, of different compartment temperature and with a compressor, which acts by refrigerant on at least two evaporators, which are arranged in series connection one behind the other and serve for cooling of the refrigerating compartments, and which is controlled by a regulating element, which is arranged in a compartment of higher temperature, for maintenance of the intended compartment temperatures, of which the compartment temperature in the compartment of higher temperature can be influenced by a heating device, wherein an electronic control unit is provided, which compares the compartment temperature, which is detected by at least one temperature sensor, in the compartment of lower temperature with a target temperature filed in a data memory, **characterised in that** when the target temperature is fallen below or exceeded the output power of the heating device is reduced or increased in such a manner that the power delivered by the heating is determined by an electronic regulator.

2. Method according to claim 1, **characterised in that** the electronic control unit compares, in each static period of the compressor, the compartment temperature, which prevails in the compartment of lower temperature, with the filed temperature target value and, when the target temperature is fallen below or exceeded, reduces or increases the output power of the heating device.

3. Method according to one of claims 1 and 2, **characterised in that** the electronic control unit reduces or increases the output power of the heating device in steps.

4. Method according to claim 3, **characterised in that** the electronic control unit reduces or increases the output power of the heating device by one step after each temperature comparison between the detected compartment temperature in the compartment of lower temperature and the target temperature.

5. Method according to claim 1 to 4, **characterised in that** the output power of the heating device is varied by a shortening or prolonging, which is effected by the electronic control unit, of the heating duration of the heating device.

6. Method according to one of claims 1 to 4, **characterised in that** the reduction or increase in the output power of the heating device is produced by a pulsed control of the heating device.

7. Method according to one of claims 1 to 6, **characterised in that** the electronic control unit evaluates the duration of the compressor static period, compares it with a comparison value and on exceeding of the comparison value leaves the output power of the heating device at the value from the preceding temperature evaluation of the compartment temperature of the compartment of lower temperature.

## Revendications

1. Procédé de réglage d'un appareil frigorifique comprenant au moins deux compartiments frigorifiques de température différente et séparés thermiquement l'un de l'autre, ainsi qu'un compresseur qui alimente en frigorigène au moins deux évaporateurs, montés en série l'un à la suite de l'autre et servant à refroidir les compartiments frigorifiques, et qui est réglé par un élément de réglage placé dans un compartiment de température supérieure pour maintenir les températures prescrites des compartiments, la température du compartiment de température supérieure pouvant être influencée par un dispositif de chauffage, une unité de commande électronique étant prévue, laquelle compare la température du compartiment de température inférieure captée par au moins un capteur de température avec une température de consigne enregistrée dans une mémoire de données et **caractérisée en ce qu'**elle augmente ou réduit, en cas de dépassement de la température de consigne vers le haut ou vers le bas, la puissance dégagée par le dispositif de chauffage de manière telle que la puissance dégagée par le chauffage est déterminée par un dispositif de réglage électronique.

2. Procédé selon la revendication 1, **caractérisé en ce qu'**à chaque temps d'arrêt du compresseur l'unité de commande électronique compare la température régnant dans le compartiment de température inférieure avec la valeur de consigne enregistrée de la température et augmenté ou réduit la puissance dégagée par le dispositif de chauffage en cas de dépassement de la température de consigne vers le haut ou vers le bas.

3. Procédé selon la revendication 1 ou 2, **caractérisé en ce que** l'unité de commande électronique augmente ou réduit graduellement la puissance dégagée par le dispositif de chauffage.

4. Procédé selon la revendication 3, **caractérisé en ce que** l'unité de commande électronique augmente ou réduit d'un niveau la puissance dégagée par le dispositif de chauffage après chaque comparaison de températures effectuée entre la température captée dans le compartiment de température inférieure et la température prescrite.

5. Procédé selon l'une des revendications 1 à 4, **caractérisé en ce que** la puissance dégagée par le dispositif de chauffage est modifiée par une prolongation ou un raccourcissement de la durée de chauffage du dispositif de chauffage, ladite prolongation ou ledit raccourcissement étant provoqués par le dispositif de commande électronique.

6. Procédé selon l'une des revendications 1 à 4, **caractérisé en ce que** l'augmentation ou la réduction de la puissance dégagée par le dispositif de chauffage sont provoquées par une commande à modulation d'impulsions en largeur du dispositif de chauffage.

7. Procédé selon l'une des revendications 1 à 6, **caractérisé en ce que** l'unité de commande électronique analyse la durée du temps d'arrêt du compresseur, la compare avec une valeur de référence et, en cas de dépassement de la valeur de référence vers le haut, laisse la puissance dégagée par le dispositif de chauffage à la valeur résultant de l'analyse de température précédente de la température du compartiment de température inférieure.
